# EUROPEAN PATENT APPLICATION

(11) **EP 4 501 577 A1**
(43) Date of publication of application: **05.02.2025**
(21) Application number: 23188562.5
(22) Date of filing: 29.07.2023
(51) Int. Cl.: B29C 45/00, B29C 45/14, B29C 45/26, B29K 705/00, H01B 3/47, H01B 17/00, H01B 17/16, H01B 17/56, B29L 31/34, B29C 45/27

(54) **METHOD OF MANUFACTURING AN INJECTION MOLDED MEDIUM-VOLTAGE INSULATOR AND A MEDIUM-VOLTAGE INSULATOR**

(71) Applicant: ABB Schweiz AG, 5400 Baden (CH)
(72) Inventor: Bednarowski, Dariusz, 31-874 Kraków (PL); Horak, Jakub, Brno (CZ); Bajerski, Pawel, Krakow (PL); Rozwod, Jakub, Lubaczow (PL); Cernohous, Josef, Jamne nad Orlici (CZ)
(74) Representative: Wroblewski, Marcin Jan

(57) **Abstract**

The invention relates to a method of manufacturing an injection molded medium-voltage insulator. The medium-voltage insulator has a cylindrical core-body 1 connected by a plurality of radial ribs 2 with external jacket 3, which comprises external circumferential ribs 4. Between the cylindrical core-body 1 and the external jacket 4 there is a separating wall 5 disposed perpendicularly to the longitudinal axis O₁ of the insulator. Radial ribs 2 are extending along the longitudinal axis O₁ of the insulator, and the insulator has first and second frontal surface 6, 7 with integrated metal inserts 8. The method of manufacturing comprises injection of thermoplastic material into a cavity of a mold in a one filling-step by separated flows through at least two injection points A. After that the thermoplastic material is guided through flow leaders towards at least one radial rib 2 in which separated flows create weld line W, which is extending over the height of the radial rib.

The invention also relates to a medium-voltage insulator which has a cylindrical core-body 1 connected by a plurality of radial ribs 2 with external jacket 3, which comprises external circumferential ribs 4. Between the cylindrical core-body 1 and the external jacket 4 there is a separating wall 5 disposed perpendicularly to the longitudinal axis O₁ of the insulator, and radial ribs 2 are extending along the longitudinal axis O₁ of the insulator. The insulator has first and second frontal surface 6, 7 with at least one integrated sleeve-shaped metal insert 8A. At a bottom of the insulator on the external jacket 3 there is a bottom ring 9 which thickness D2 is from 25% to 200% bigger than the thickness D1 of the external jacket 3 in an area without circumferential rib 4. The sleeve-shaped metal insert 8A located in the second frontal surface 7 has its upper edge located within separating wall 5.

## Description

### Technical field of the invention

The subject of the invention are method of manufacturing an injection molded medium-voltage insulator and a medium-voltage insulator. The medium voltage insulator are used in medium voltage switchgears, in particular in switchgear which are suitable for indoor installations.

### Background of the invention

Patent application FR3001080A1 discloses a medium voltage insulator-support. This invention relates to an electricity insulated support, of the kind intended to keep two electrically conductive parts separated at different potentials, thus insulator resists at least a medium voltage. The conductive parts can be an electrical conductor and its casing, belonging to an atmosphere-confirmed electrical apparatus, and they are fixed to opposite ends of the insulator support by screws or similar means. The insulator-support is provided with metal inserts with internal thread in which the screws are engaged. This insulator-support comprises a body whose end regions are provided with housings with a lateral opening to receive the metal inserts which are introduced therein after manufacturing process of insulator body. The metal inserts are retained in the insulator by the clamping forces without the need to fix the inserts in the body. The insulator-support body is produced by molding a thermoplastic polymer in a mold designed for it, with the molten material being injected first into the beginning of the casting before flowing both axially toward the end area and radially outward. The metal inserts are manufactured separately by molding or machining the metal, and then installed in the body after it is removed from the mold.

From the description of the utility model CN204792245U, an indoor insulator applied to medium voltage, in particular 10-20kV, is known. The insulator is manufactured by injection molding using a flame retardant and recyclable modified material. The insulator body is cylindrical and comprises a copper bar stiff end, insulator stiff end, circumferential ribs, and base. The base is hollow construction and has a plurality of symmetrically distributed radial, strengthening ribs.

From the description of patent application WO2011023721A1, an insulator having a substantially cylindrical insulating body is known. The insulator is made in one piece as an injection molded part. It has an inner cylindrical body connected by reinforcing radial ribs and a separating wall with a surrounding jacket. Metal inserts with internal threads are provided at each end of the end faces of the insulator. What is more, the external surface of the metal inserts is provided with grooves, knurling or tapering for positive locking. The separating wall is disposed in a normal manner on the longitudinal axis of the insulator also runs through at least some of the longitudinal openings formed by the inner cylindrical body, the jacket, and the reinforcing radial ribs. The separating wall covers 360 degrees and is preferably located at half of the cylinder height. The insulator can have filled internal volume of the cylindrical insulating body. In such a case the injection molding process is carried out through an upper end of the insulator, which is designed with a bore for this purpose. However in this case it is difficult to fill? internal cavity of the cylindrical insulating body in a one filing step. The main obstacle is different wall thicknesses and the associated impairment of a flow paths of injected materials.

### Problem

The object of the invention is to provide a method of manufacturing an injection molded medium-voltage insulator, which will be faster than the existing methods and at the same time will not impar the mechanical strength of the medium-voltage insulator.

### The essence of the invention

The invention concerns method of manufacturing an injection molded medium-voltage insulator having a cylindrical core-body connected by a plurality of radial ribs with external jacket which comprises external circumferential ribs, wherein between the cylindrical core-body and the external jacket there is a separating wall disposed perpendicularly to the longitudinal axis of the insulator, and wherein radial ribs are extending along the longitudinal axis of the insulator, and wherein the insulator has first and second frontal surface with integrated metal inserts. The method comprises injection of thermoplastic material into a cavity of a mold. The essence of the invention is that the thermoplastic material is injected into the cavity of a mold in a one filling-step by separated flows through at least two injection points and the thermoplastic material is guided through flow leaders towards at least one radial rib in which separated flows create weld line, and the weld line is extending over the height of the radial rib.

It is desirable, that for the medium-voltage insulator having circular cross-section injection points are located in the opposite position to each other.

In case when, the thermoplastic material is injected through two injection points and an angular distance between injection points is 180°, and the angular distance between the injection point and the mold cavity corresponding to the one of the radial ribs is 90°.

It is advantageous if the thermoplastic material comprises integrated reinforcing fibers, especially glass fibers.

Another aspect of invention concerns a medium-voltage insulator having a cylindrical core-body connected by a plurality of radial ribs with external jacket, which comprises external circumferential ribs, wherein between the cylindrical core-body and the external jacket there is a separating wall disposed perpendicularly to the longitudinal axis of the insulator, and wherein radial ribs are extending along the longitudinal axis of the insulator, and wherein the insulator has first and second frontal surface with at least one integrated sleeve-shaped metal insert. The essence of the invention is that on the external jacket, in an area adjacent to the second frontal surface with integrated sleeve-shaped metal insert, there is a bottom ring which thickness is from 25% to 200% bigger than the thickness of the external jacket in an area without circumferential rib, and the sleeve-shaped metal insert located in the second frontal surface has its upper edge located within separating wall.

It is also good if bottom ring has height in the range from 100% to 500% of its thickness.

It is desirable, that the insulator is made of thermoplastic material with reinforcing fibers, especially with glass fibers.

It is also beneficial if the fibers are aligned along the axis of insulator.

It is desirable if the sleeve-shaped metal insert has on its external surface grooves, knurling or tapering for positive locking.

It is especially good if sleeve-shaped metal insert has at least one circumferential groove which is located along circumferential line with the predicted earliest thermoplastic material supply during a manufacturing process and intended for pressing the sleeve-shaped metal insert against a socket in a mold during the manufacturing process.

It is also good, when the groove in the sleeve-shaped metal insert is trapezoidal in cross-section.

It is also beneficial if location of the groove in the sleeve-shaped is chosen based on simulation of thermoplastic material flow during the manufacturing process.

### Advantages of the invention

Main advantages of the invention include faster production process, which does not interfere with quality of the medium-voltage insulator. By the injecting the thermoplastic material into cavity by two or more injection points, the same amount of the material can be injected into cavity in the shorter time, in comparison to one injection point. The number of the injection points can be increased and the flow of the thermoplastic material can be guided through flow leaders towards selected radial ribs.

Besides, two injection points located on the bottom part of the medium-voltage insulator, in the opposite position to each other, are improving uniform filling of the mold cavity. When the thermoplastic material with reinforcing fibers is used, two injection points and flow leader improve alignment of fibers along the axis of insulator.

Flow leader has form of a bottom ring on a the external jacket. It is definitely thicker than the external jacket walls without circumferential rib. It is also located at the bottom of the medium voltage insulator, so it corresponds to location of the injection points. Its dimensions and design allow for unform filling of the mold cavity and for directing flow fromm the injection points towards the selected radial ribs.

What is more the mechanical strength is also high. The weld line is formed in the section of radial with rib what significantly improves mechanical performance in the weakest spot of thermoplastic material or thermoplastic material with reinforcing fibers. Besides radial rib, as such, is a constructional element which improves mechanical strength. Location of an edge of sleeve-shaped metal insert within separating wall locally boosts mechanical performance, increases braking load and improve uniform filling by equalizing material flow.

Another advantage is in that, sleeve-shaped metal insert has on its external surface circumferential groove. Its location is based on thermoplastic flow simulations and is in the line with the predicted earliest thermoplastic material supply during a manufacturing process. Front of plastic material presses the sleeve-shaped metal insert into the socket in the mold cavity. In advantageous embodiment, the groove is trapezoidal in cross-section, so its inclined wall forms a retaining surface for thermoplastic material flow.

In addition, the fact that the body is made of thermoplastic material, favorably of recyclable thermoplastic material, makes the medium-voltage insulator environmentally friendly. Instead of non-recyclable epoxy resins recyclable materials are used. It also reduces CO₂ emissions. What is more, the medium voltage insulator can be silicone free if needed. The medium voltage insulator made of thermoplastic materials has also low weight and cost.

### Description of the drawings

Embodiments of the subject matter of the invention have been presented in the drawing, where:

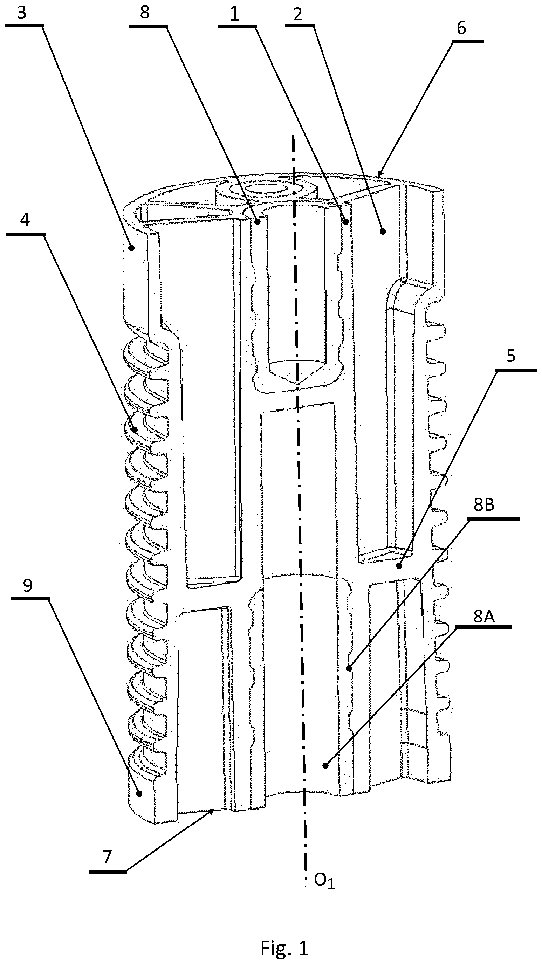

- Fig. 1: presents a medium-voltage insulator in a longitudinal cross-section;

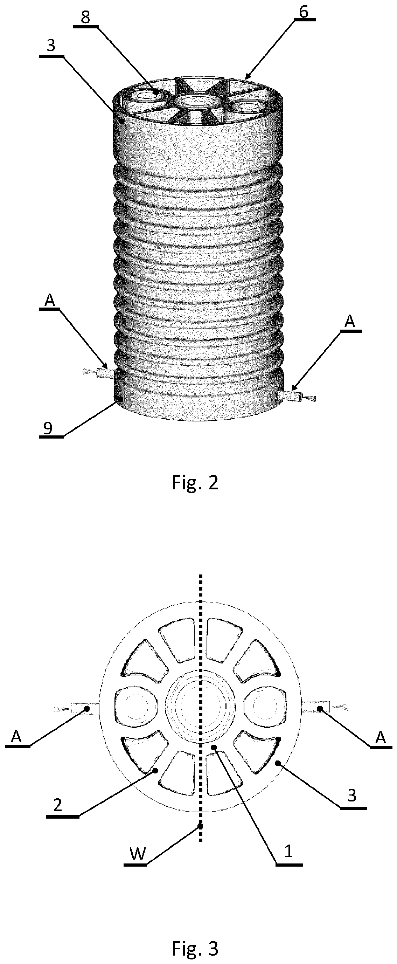

- Fig. 2: presents the medium-voltage insulator in a perspective view;
- Fig. 3: presents the medium-voltage insulator in a top view;

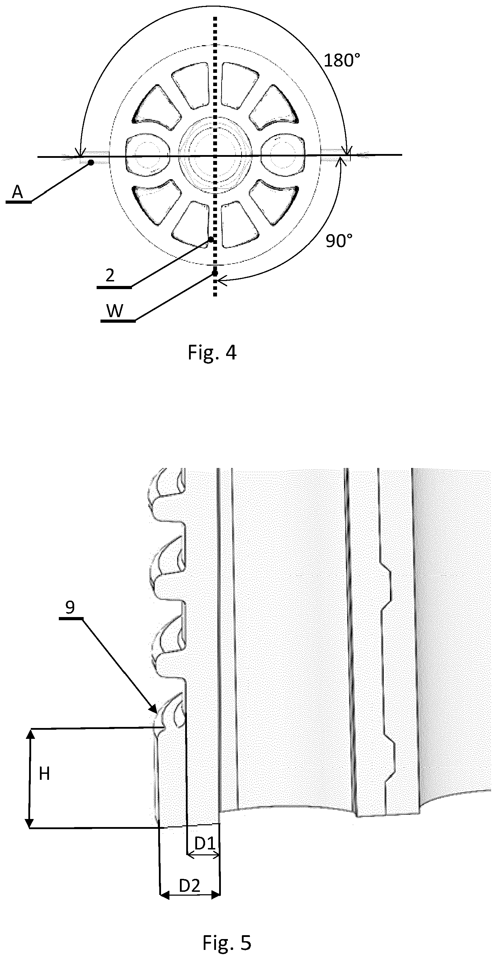

- Fig. 4: presents the medium-voltage insulator in a next top view;
- Fig. 5: presents a partial longitudinal cross section of the medium-voltage insulator;

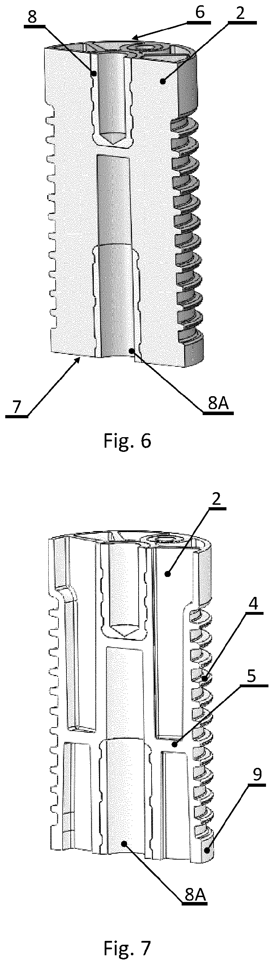

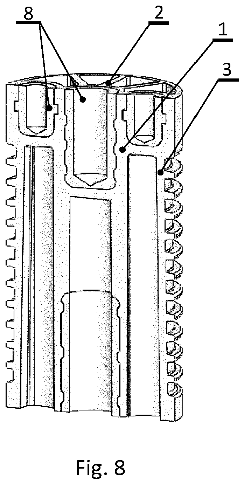

- Fig. 6 - Fig. 8: present further longitudinal cross-sections of the medium-voltage insulator.

### Detailed description of the invention

A medium-voltage insulator is a post type of insulator. It is designed especially for medium-voltage switchgear and is used in switch panels and switch cells. The medium-voltage insulator has circular cross section and has been produced by injection molding process from thermoplastic material.

The medium-voltage insulator has a cylindrical core body 1 connected by a plurality of radial ribs 2 with external jacket 3, which comprises external circumferential ribs 4. The medium-voltage insulator has first and second frontal surface 6, 7, wherein as depicted on the drawing the first frontal surface 6 is an upper surface, whereas the second frontal surface 7 is a bottom surface.

Metal inserts 8, 8A are integrated in the first and second frontal surfaces 6, 7. In the first frontal surface 6 there are three metal inserts 8, which have first open end with opening of internal bore and second closed end. In the bore they have thread for engagement with electrical equipment. On the external surface metal inserts 8 have grooves or protrusions for locking in thermoplastic material of the medium-voltage insulator. In the second frontal surface 7 there is one sleeve-shaped metal insert 8A. An internal surface of sleeve-shaped metal insert 8A is threaded, also for engagement with electrical equipment. On the external surface of the sleeve-shaped metal insert 8A there are groves 8B which are trapezoidal in cross-section. They are primarily for locking sleeve-shaped metal insert 8A in thermoplastic material. First of these grooves 8B is located along circumferential line with the predicted earliest thermoplastic material supply during a manufacturing process. It is intended to pressing the metal insert 8A against a socket in a mold during the manufacturing process. It guarantees that the position of the sleeve-shaped metal insert 8A during manufacturing will not change. Its position is based on simulation of thermoplastic material flow during the manufacturing process. Therefore during manufacturing process the thermoplastic material flow at the beginning reaches the groove 8B and presses the metal insert 8A against a socket in the mold.

Radial ribs 2 connect core body 1 with external jacket 3. They extend along the longitudinal axis O1 of the insulator. They provide mechanical strength to the medium voltage insulator, reinforcing the structure of the entire device. Besides two radial ribs there is a weld line W is extending over the height of these radial rib as well as is going through the corresponding areas of the core body 1 and the external jacket 3.

Between the cylindrical core body 1 and the external jacket 3 there is a separating wall 5 disposed perpendicularly to the longitudinal axis O₁ of the insulator. The separating wall 5 covers most of the angular surface of the medium-voltage insulator, because it does not cover areas corresponding to metal inserts 8 which are located outside the axis O1 of the medium-voltage insulator. The separating wall is located in such a way that the sleeve-shaped metal insert 8A has its upper edge located within separating wall 5, in order to locally boost mechanical performance, increase braking load and improve manufacturing process, because during production space of separating wall 5 uniforms filling of mold cavity with a thermoplastic material and equalizes the flow of the thermoplastic material.

At bottom of the medium-voltage insulator on the external jacket 3, i.e. in an area adjacent to the second frontal surface 7 with integrated sleeve-shaped metal insert 8A, , there is a bottom ring 9. Its thickness D2 is from 25% to 200% bigger than the thickness D1 of the external jacket 3 in an area without circumferential rib 4. What is more height H of the bottom ring ranges from 100% to 500% of its thickness D2.

In the embodiment: thickness D1 is 3,4 mm, thickness D2 is 6,2 mm; height H is 10,2 mm. The medium-voltage insulator is molded from polyamide based polymers reinforced with glass fibers. Fibers are integrated in raw material, which is injected into mold as composite. Therefore, fibers are aligned in the finished medium-voltage insulator according to the flow of the thermoplastic material during injection molding process. Therefore, fibers are aligned along the axis O₁ of insulator. It further enhances the mechanical strength of the medium voltage insulator.

In other embodiments, the medium-voltage insulator is molded from high strength and dielectric thermoplastic material, or thermoplastic composite material, including but not limited to acetal and ketal based polymers and copolymers, polyesters, with polyethylene terephthalate and polybutylene terephthalate; polycarbonate, polystyrene, polyether sulfone, polyphenylene sulfone, polysulfone, and polytetrafluoroethylene. Also, other polymers can also be implemented, including but not limited to polyvinyl chloride, polyethylene, polypropylene, polyetherimide, polyphenylene sulfide, polyether ether ketone, polyphthalamide, polyoxymethylene, phenolformaldehyde, unsatured polyester, polyurethane, polyimide, polyvinyl alcohol, polyvinylidene chloride, polyacrylonitrile and polyalkylene paraoxybenzoate. In some embodiments, the composite can include a variety of types of fibers, including but not limited to glass fiber, basalt fiber, wool, silk, cotton, rayon, cellulose, cellulose acetate, flax, ramie, jute and aramid fibers. In some embodiments, additives can be used to improve the qualities of the materials, including but not limited to the mechanical and thermal stability, chemical resistance, insulation property and flammability. The additives can include, but are not limited to, ceramics, alumina, calcium silicate, flame retardants and clays.

In each embodiment the medium-voltage insulator is injection molded. During production process the thermoplastic material is injected into the cavity of a mold in a one filling-step by separated flows through two injection points A. From injection points A the thermoplastic material is guided through flow leaders, in the form of bottom ring 9, towards two radial ribs 2 in which separated flows create weld line W, because of the material of the flows does not mix. The weld line W extends over the height of the radial rib 2 as well as goes through the corresponding areas of the core body 1 and the external jacket 3.

The medium-voltage insulator in the embodiment has circular cross section. Therefore the two injection points A are located in the opposite position to each other. An angular distance between them is 180°. In this embodiment also radial ribs 2 in which the weld line is created are in the opposite position to each other. The angular distance between them is also 180°. Therefore the angular distance between the single injection point A and the mold cavity corresponding to the single radial rib 2 is 90°.

In other embodiments, different number of injection points can be used. They must be arranged so the thermoplastic material flows will be guided to meet in area corresponding to radial ribs 2.

## Claims

1. Method of manufacturing an injection molded medium-voltage insulator having a cylindrical core-body (1) connected by a plurality of radial ribs (2) with external jacket (3), which comprises external circumferential ribs (4), wherein between the cylindrical core-body (1) and the external jacket (4) there is a separating wall (5) disposed perpendicularly to the longitudinal axis (O₁) of the insulator, and wherein radial ribs (2) are extending along the longitudinal axis (O₁) of the insulator, and wherein the insulator has first and second frontal surface (6, 7) with integrated metal inserts (8), comprising injection of thermoplastic material into a cavity of a mold, **characterized in that** the thermoplastic material is injected into the cavity of a mold in a one filling-step by separated flows
• through at least two injection points (A) and
• the thermoplastic material is guided through flow leaders towards at least one radial rib (2) in which separated flows create weld line (W),
• and the weld line (W) is extending over the height of the radial rib (2).

2. Method according to claim 1, **characterized in that** for medium-voltage insulator having circular cross-section injection points (A) are located in the opposite position to each other.

3. Method according to claim 2, **characterized in that** the thermoplastic material is injected through two injection points (A) and an angular distance between injection points (A) is 180°, and wherein the angular distance between the injection point (A) and the mold cavity corresponding to the one of the radial ribs (2) is 90°.

4. Method according to any preceding claim from 1 to 3, **characterized in that**, the thermoplastic material comprises integrated reinforcing fibers, especially glass fibers.

5. Medium-voltage insulator having a cylindrical core-body (1) connected by a plurality of radial ribs (2) with external jacket (3), which comprises external circumferential ribs (4), wherein between the cylindrical core-body (1) and the external jacket (4) there is a separating wall (5) disposed perpendicularly to the longitudinal axis (O₁) of the insulator, and wherein radial ribs (2) are extending along the longitudinal axis (O₁) of the insulator, and wherein the insulator has first and second frontal surface (6, 7) with at least one integrated sleeve-shaped metal insert (8A),
**characterized in that**
on the external jacket (3), in an area adjacent to the second frontal surface (7) with integrated sleeve-shaped metal insert (8A), there is a bottom ring (9) which thickness (D2) is from 25% to 200% bigger than the thickness (D1) of the external jacket (3) in an area without circumferential rib (4),
and the sleeve-shaped metal insert (8A) located in the second frontal surface (7) has its upper edge located within separating wall (5).

6. Medium-voltage insulator, according to claim 5, **characterized in that** bottom ring (9) has height (H) in the range from 100% to 500% of its thickness (D2).

7. Medium-voltage insulator, according to claim 5 or 6, **characterized in that** it is made of thermoplastic material with reinforcing fibers, especially with glass fibers.

8. Medium-voltage insulator, according to claim 7, **characterized in that** fibers are aligned along the axis O₁ of insulator.

9. Medium-voltage insulator, according to any claim form 5 to 8, **characterized in that** the sleeve-shaped metal insert (8A) has on its external surface grooves, knurling or tapering for positive locking.

10. Medium-voltage insulator, according to any claim from 5 to 9, **characterized in that**, the sleeve-shaped metal insert (8A) has at least one circumferential groove (8B) which is located along circumferential line with the predicted earliest thermoplastic material supply during a manufacturing process, intended to pressing the metal insert (8A) against a socket in a mold during the manufacturing process.

11. Medium-voltage insulator, according to claim 10, **characterized in that** the groove (8B) is trapezoidal in cross-section.

12. Medium-voltage insulator, according to claim 10 or 11, **characterized in that** location of the groove (8B) is chosen based on simulation of thermoplastic material flow during the manufacturing process.
